# FASCICULE DE BREVET EUROPEEN

(11) **EP 1 249 158 B1**
(45) Date de publication et mention de la délivrance du brevet: **23.01.2008**
(21) Numéro de dépôt: 02366005.3
(22) Date de dépôt: 02.04.2002
(51) Int. Cl.: A01G 13/02

(54) **Machine agricole pour la pose mécanique d'une nappe sur le sol apte à la récupérer mécaniquement et à l'enrouler sur une bobine**
Landwirtschaftsmaschine für das mechanische Verlegen von Tuchmaterial auf den Boden und zum mechanischen Aufsammeln und Wideraufwickeln auf eine Spule
Agricultural machine for mechanically laying a sheet material on the ground and capable of mechanically retrieving and winding it on a reel

(30) Priorité: 09.04.2001 FR 0104748
(43) Date de publication de la demande: 16.10.2002
(73) Titulaire: FIBERWEB FRANCE SA, 68600 Biesheim (FR)
(72) Inventeur: Mora, Patrick, 02600 Taller (FR); Defalque, Pierre, 68420 Obermorschwihr (FR); Hunsinger, Didier, 68600 Biesheim (FR)
(74) Mandataire: Poupon, Michel

(56) Documents cités:
- FR-A- 2 798 254
- US-A- 3 481 556
- US-A- 4 084 763

## Description

La présente invention concerne un perfectionnement pour une machine agricole pour dérouler, étendre et fixer un voile ou un film sur le sol.

Il est connu d'utiliser des voiles en non tissé ou des films plastiques dans les cultures maraîchères plein champ pour la protection des semis ou des jeunes plants.

Un voile ou un film de grande largeur (de 3 à 7m par exemple) est généralement plié et enroulé sur un mandrin cylindrique pour former des bobines achetées par l'agriculteur qui dispose d'une machine pour dérouler mécaniquement et étendre sur le sol le voile ou le film, qu'il faut ensuite déplier et fixer au sol manuellement.

Un voile ou un film de moins grande largeur (par exemple 3m) peut être directement enroulé sans pliage sur un mandrin, puis déroulé mécaniquement par une machine qui réalise, au fur et à mesure du déroulage, le maintien des bords latéraux du voile ou du film par enfouissement automatique desdits bords au moyen d'un système à roue tasseuse et à disque ouvreur.

Toutes les machines connues sont conçues pour être attelées à l'arrière d'un tracteur.

Pour récupérer mécaniquement le voile et le réenrouler sur un mandrin, l'agriculteur dispose d'une autre machine. Il existe par exemple celle décrite dans la demande FR 2 667 759 conçue pour être attelée à l'arrière du tracteur, ce qui nécessite de rouler en marche arrière pour récupérer le voile ou le film.

Les opérations de pose et de récupération mécanique sont généralement longues et/ou nécessitent beaucoup de main d'oeuvre, et requièrent l'achat de deux machines fonctionnellement différentes.

L'invention vise à pallier tous ces inconvénients et à proposer une machine apte à la fois à poser mécaniquement une nappe sur le sol, à la récupérer et à l'enrouler mécaniquement sur une bobine en vue d'une utilisation ultérieure éventuelle.

Tous ces inconvénients sont résolus par l'invention qui consiste en une machine pour dérouler, étendre et maintenir mécaniquement une nappe sur le sol, par exemple dans des cultures maraîchères plein champ, machine du type comportant principalement :
- un châssis avec notamment une poutre porteuse de longueur appropriée à la longueur de la bobine à recevoir ;
- à chaque extrémité du châssis, une nacelle pour un opérateur,
- un ensemble de roues prévues pour le déplacement de la machine,
- des moyens d'entraînement avec notamment un moteur hydraulique et des moyens de réception d'une bobine et d'accouplement de celle-ci au moteur,
- de chaque côté du châssis, un bras à parallèlélogramme portant un système d'enfouissement à roue tasseuse et à disque ouvreur,
- un ensemble de moyens d'attelage de la machine à un tracteur avec des raccordements hydrauliques et électriques appropriés,
la même machine étant apte, d'une part lorsqu'elle est attelée à un tracteur, à réaliser la pose mécanique d'une nappe sur le sol et apte, d'autre part lorsqu'elle est attelée audit tracteur, à réaliser la récupération mécanique de ladite nappe et son enroulement automatique sur une bobine portée par la machine,

Caractérisé en ce que ladite machine comporte au moins deux configurations, à savoir :
- une configuration pose selon laquelle elle est disposée transversalement à la direction de déplacement du tracteur, et roule sur deux roues, et comporte deux bras, chacun des bras étant placé en position pose, c'est-à-dire écarté vers l'extérieur de façon à appliquer sur chaque bord de la nappe sur le sol par une roue tasseuse, suivie d'un disque ouvreur qui rejette de la terre sur le bord de ladite nappe de façon à la maintenir au sol,
- une configuration récupération selon laquelle elle est disposée transversalement à la direction de déplacement, roule sur les roues, les bras étant effacés, et un arceau de relevage pivotant étant mis en place pour soulever la nappe pendant toute la récupération.

Grâce à ces dispositions, on obtient une seule machine adaptée à réaliser alternativement soit la pose de la nappe sur le sol, soit la récupération de ladite nappe en fonction des souhaits de l'utilisateur.

De façon préférentielle mais non obligatoire et afin de faciliter le pilotage du tracteur et de rouler en marche avant pendant la pose et la récupération la machine selon l'invention est apte à être attelée à l'arrière du tracteur pour la configuration pose et apte à être attelée à l'avant dudit tracteur pour la configuration récupération.

On comprendra mieux l'invention à l'aide de la description ci-après d'un mode de réalisation non limitatif de l'invention, faite en référence aux figures annexées suivantes :
- figure 1 : vue générale d'une machine selon l'invention en configuration "pose",
- figure 2 : vue générale de la machine de la figure 1 en configuration "récupération",
- figure 3 : vue générale de la machine des figures 1 et 2, en configuration "route",
- figure 4 : vue de détail d'un arceau basculant monté sur la machine dans sa configuration "récupération" de la figure 2,
- figure 5 : vue latérale d'un montant de liaison de l'arceau de la figure 4 sur le châssis de la machine de la figure 2,
- figure 6 : vue latérale d'une platine de liaison.

Par souci de simplification, on utilise, dans la suite du texte et dans les revendications, le terme général de "nappe" pour désigner un voile en non tissé ou un film plastique.

Une machine (1) selon l'invention comporte principalement :
- un châssis (2) avec notamment une poutre porteuse (3) de longueur appropriée à la longueur de la bobine à recevoir ;
- à chaque extrémité du châssis, une nacelle (4) pour un opérateur (5),
- un ensemble de roues prévues pour le déplacement de la machine et détaillées plus loin,
- des moyens d'entraînement avec notamment un moteur hydraulique (6) et des moyens de réception d'une bobine et d'accouplement de celle-ci au moteur,
- de chaque côté du châssis (2), un bras (7) à parallélogramme portant un système d'enfouissement à roue tasseuse (8)et à disque ouvreur (9), de type connu,
- un ensemble de moyens d'attelage de la machine à un tracteur avec des raccordements hydrauliques et électriques appropriés.

L'ensemble des moyens énumérés ci-dessus ne sont pas décrits en détail car déjà connus ou de réalisation simple pour l'homme du métier.

L'originalité de la machine réside dans le fait qu'elle peut présenter au moins deux configurations différentes appelées "configuration pose", "configuration récupération", et éventuellement une "configuration route" qui sont détaillées ci-après.

Une autre originalité de la machine réside, d'une part dans un arceau de relevage (10) basculant monté sur la machine en configuration récupération et dont les fonctions sont de soulever la nappe pour évacuer la terre qui la maintenait au sol, d'étendre et répartir la nappe régulièrement sur toute sa largeur, et d'autre part dans des moyens de réglage de la tension de la nappe en fonction de la vitesse de la machine.

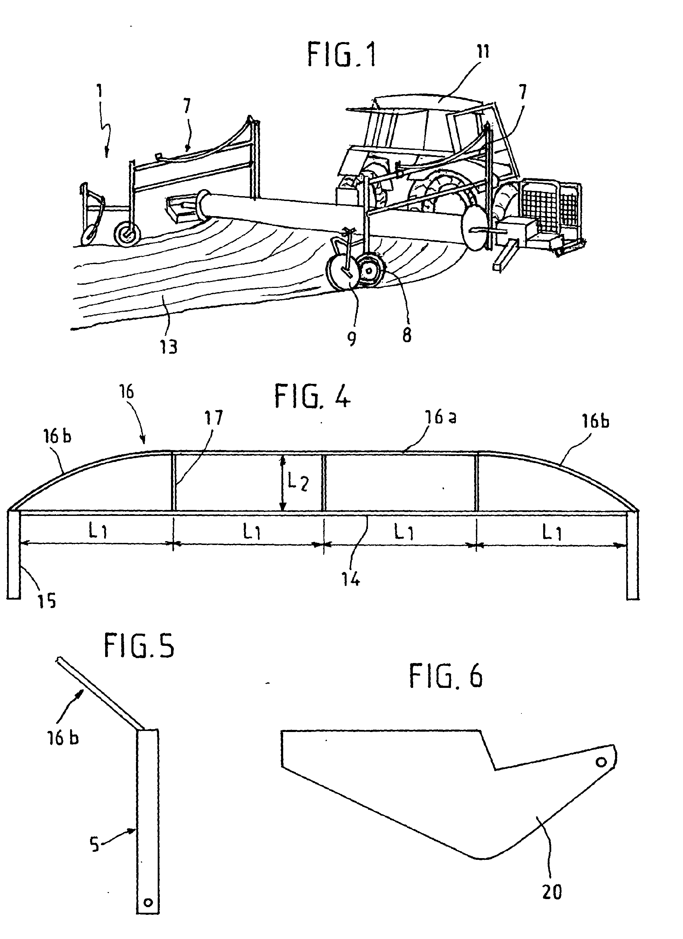

La configuration pose est représentée en figure 1.

La machine (1) est attelée à un attelage trois points (non visible) à l'arrière d'un tracteur (11).

Elle est disposée transversalement à la direction de déplacement du tracteur et roule sur deux roues (12).

Chacun des bras (7) est placé en position pose, c'est-à-dire écarté vers l'extérieur de façon à appliquer chaque bord de la nappe sur le sol au moyen d'une roue tasseuse (8), suivie d'un disque ouvreur (9) qui rejette de la terre sur le bord de ladite nappe de façon à la maintenir au sol.

On peut prévoir en outre des moyens de réglage de la profondeur de pénétration des disques ouvreurs.

Les deux opérateurs (5) dans les nacelles surveillent le déroulement de la nappe (13) et peuvent régler la vitesse de déroulement de celle-ci, et donc sa tension d'enroulement, en fonction de la vitesse d'avancement du tracteur (11) grâce à des galets freins connus et non visibles prévus sur les moyens d'entraînement de la bobine.

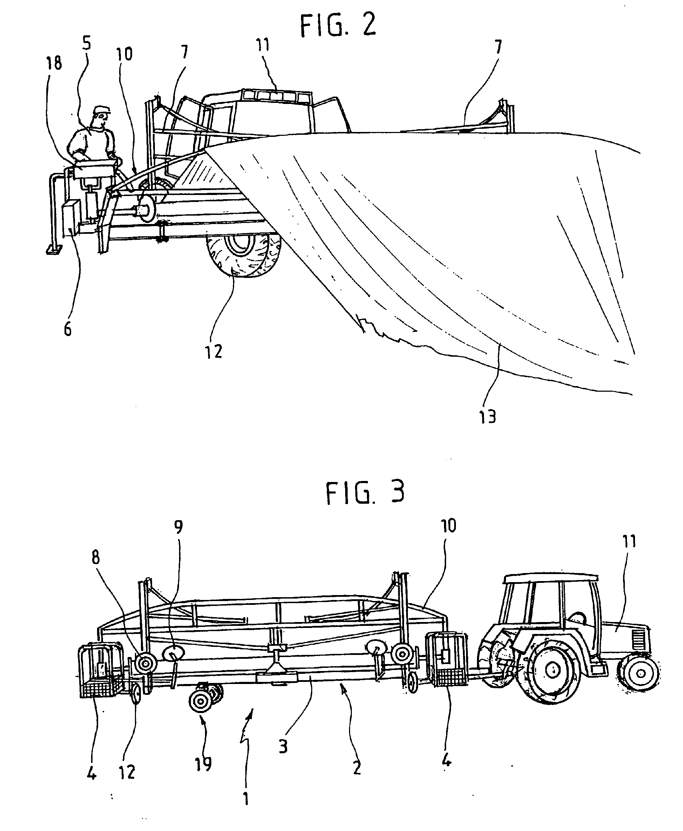

La configuration récupération est représentée en figure 2.

La machine est attelée à l'avant du tracteur (11), disposée transversalement à la direction de déplacement du tracteur et peut rouler sur les roues (12). Ceci permet d'assurer une meilleure stabilité de la machine.

Il s'agit de préférence mais non limitativement d'un tracteur de 80ch minimum avec quatre roues motrices et un équipement de relevage à l'avant de 2 500 kg aux rotules.

Les bras, inutiles pour la récupération de la nappe sont, par exemple, repliés parallèlement à la poutre, à l'arrière de la machine comme sur la figure 2 (ils pourraient, en variante, être démontés et enlevés).

L'arceau de relevage (10) est mis en place pour soulever la nappe pendant toute la durée de la récupération.

Il est formé de tubes soudés dont un tube horizontal inférieur (14) sensiblement de même largeur que la machine (1) avec à chaque extrémité un montant de liaison (15) apte à être monté pivotant à chaque extrémité du châssis de la machine, un tube supérieur (16) avec une partie centrale horizontale (16a) et deux parties latérales (16b) courbées ou inclinées et soudées aux deux extrémités du tube inférieur.

L'écartement des tubes inférieurs (14) et supérieur (16) est maintenu par un ensemble de tubes verticaux (17).

A titre d'exemple non limitatif, l'arceau de la figure 4 comporte trois tubes verticaux (17) de 0.69 m environ et les parties latérales (16b) sont chacune courbées sur environ 1/4 de la longueur d'un arceau, soit sur 1.825 m pour une longueur totale d'arceau de 7.30 m environ.

Cet arceau de la figure 4 peut soulever et tendre des nappes par exemple de 6 à 7 m de large sur une longueur linéaire de 500 m. Il est maintenu de chaque côté par une platine fixe (20) dont la forme assure le respect de l'angle prédéterminé de l'arceau par rapport au châssis.

Un ou plusieurs vérins hydrauliques permettent l'articulation latérale de l'ensemble du châssis par rapport à la poutre porteuse fixée sur le relevage avant du tracteur. Ceci permet d'enrouler le voile de façon optimale et d'aligner les flancs de la bobine.

Pour le démarrage de l'opération de récupération, la nappe est soulevée par les deux opérateurs, placée sur le tube supérieur de l'arceau et mise en place par des moyens appropriés sur le mandrin de la bobine. Puis les opérateurs montent sur les nacelles (4) et l'un d'eux commande d'une part l'enroulement du mandrin depuis un tableau de commande (18) qui sert également à réguler la vitesse d'enroulement en fonction de la vitesse d'avancement du tracteur grâce à un distributeur hydraulique, et d'autre part l'articulation du châssis qui permet d'enrouler avec précision le voile sur le mandrin.

Le moteur, les autres moyens d'entraînement et d'accouplement de la bobine, les moyens d'attelage et de connexion au tracteur sont les mêmes que dans la configuration pose.

Pendant la durée de l'opération de récupération, le tracteur avance et la nappe glisse sur le tube supérieur (16) qui sert à soulever et tendre la nappe à la hauteur désirée, l'inclinaison des deux bords de la nappe induite par les deux parties latérales (16b), sert à tendre la nappe et donc à évacuer les dépôts de terre qui maintenaient la nappe sur le sol.

Les opérateurs surveillent l'enroulage et agissent, si nécessaire, sur le régulateur hydraulique du moteur ainsi que sur l'articulation latérale du châssis, le distributeur hydraulique servant à réguler la vitesse d'enroulement en configuration récupération.

La configuration route de la machine est représentée en figure 3.

Les bras (7) sont repliés comme en configuration récupération et les systèmes d'enfouissement (8) (9) dégagés du sol.

L'arceau de relevage (10) est placé et maintenu à l'arrière du châssis, parallèlement à la poutre (3), en position verticale.

La poutre est montée sur un essieu (19) à deux roues de transport, ledit essieu étant perpendiculaire à la poutre elle-même attelée à l'arrière du tracteur par l'une de ses extrémités de façon à se déplacer sur route selon la direction de la poutre.

Les roues (12) utilisées dans la configuration pose et récupération sont démontées et rangées sur le châssis.
- Une machine selon l'invention permet :
   - une économie de main d'oeuvre importante par rapport à une pose et une récupération classique à la main,
   - la pose et la récupération de nappes sur une même machine apte à porter des bobines de toutes largeurs jusqu'à 15 m (de préférence inférieures ou égales à 10,50 m pour des raisons de facilité de pose et dépose),
   - une vitesse de pose et de récupération de 5 à 6 km/h soit 10ha/jour, en fonction de la largeur du voile et de l'organisation du chantier de travail,
   - une rapidité de changement de configuration.
   - un ancrage efficace du voile dans le sol évitant son arrachage avec les intempéries,
   - la récupération et l'enroulement de précision sur le mandrin permettant de conserver le voile dans des conditions optimales pour sa réutilisation.

## Revendications

1. Machine pour dérouler, étendre et maintenir mécaniquement une nappe sur le sol, par exemple dans des cultures maraîchères plein champ, machine du type comportant principalement :
- un châssis (2) avec notamment une poutre porteuse (3) de longueur appropriée à la longueur de la bobine à recevoir ;
- à chaque extrémité du châssis, une nacelle (4) pour un opérateur (5),
- un ensemble de roues prévues pour le déplacement de la machine,
- des moyens d'entraînement avec notamment un moteur hydraulique (6) et des moyens de réception d'une bobine et d'accouplement de celle-ci au moteur,
- de chaque côté du châssis (2), un bras (7) à parallèlélogramme portant un système d'enfouissement à roue tasseuse et à disque ouvreur (9),
- un ensemble de moyens d'attelage de la machine à un tracteur avec des raccordements hydrauliques et électriques appropriés,
la même machine étant apte, d'une part lorsqu'elle est attelée à un tracteur, à réaliser la pose mécanique d'une nappe (13) sur le sol et apte, d'autre part lorsqu'elle est attelée audit tracteur (11), à réaliser la récupération mécanique de ladite nappe et son enroulement automatique sur une bobine portée par la machine,
**caractérisée en ce qu'**elle comporte au moins deux configurations, à savoir :
- une configuration pose selon laquelle elle est disposée transversalement à la direction de déplacement du tracteur, et roule sur deux roues (12), et comporte deux bras (7), chacun des bras étant placé en position pose, c'est-à-dire écarté vers l'extérieur de façon à appliquer sur chaque bord de la nappe sur le sol par une roue tasseuse (8), suivie d'un disque ouvreur (9) qui rejette de la terre sur le bord de ladite nappe de façon à la maintenir au sol,
- une configuration récupération selon laquelle elle est disposée transversalement à la direction de déplacement, roule sur les roues (12), les bras (17) étant effacés, et un arceau de relevage pivotant (10) étant mis en place pour soulever la nappe pendant toute la récupération.

2. Machine selon la revendication 1 **caractérisée en ce que** l'arceau de relevage (10) est formé de tubes soudés dont un tube horizontal inférieur (14) sensiblement de même largeur que la machine (1) avec, à chaque extrémité, un montant de liaison (15) apte à être monté pivotant à chaque extrémité du châssis de la machine, un tube supérieur (16) avec une partie centrale horizontale (16a) et deux parties latérales (16b) courbées ou inclinées et soudées aux deux extrémités du tube inférieur, l'écartement des tubes inférieurs (14) et supérieur (16) étant maintenu par un ensemble de tubes verticaux (17).

3. Machine selon l'une des revendications 1 à 2, **caractérisée en ce qu'**elle comporte en outre un distributeur hydraulique servant à réguler la vitesse d'enroulement en configuration récupération.

4. Machine selon l'une des revendications 1 à 3, **caractérisée en ce qu'**elle comporte en outre une configuration route selon laquelle les bras (7) sont repliés comme en configuration récupération, l'arceau de relevage (10) est placé et maintenu à l'arrière du châssis parallèlement à la poutre (3) et en position verticale, la poutre étant montée sur un essieu (19) à deux roues de transport, ledit essieu étant perpendiculaire à la poutre elle-même attelée à l'arrière du tracteur par l'une de ses extrémités.

5. Machine selon l'une des revendications 1 à 4, **caractérisée en ce qu'**elle comporte en outre des galets freins prévus sur les moyens d'entraînement de la bobine.

6. Machine selon l'une des revendications 1 à 5, **caractérisée en ce que** on prévoit en outre des moyens de réglage de la profondeur de pénétration des disques ouvreurs.

7. Machine selon l'une des revendications 1 à 6, **caractérisée en ce que** l'arceau a une longueur de 6 à 8m.

8. Machine selon l'une des revendications 1 à 6, **caractérisée en ce qu'**elle est apte à porter des bobines jusqu'à 15 mètres de largeur.

9. Machine selon l'une des revendications 1 à 8, **caractérisé en ce qu'**elle est apte à être attelée à l'arrière du tracteur pour la configuration pose et apte à être attelée à l'avant dudit tracteur pour la configuration récupération.

## Claims

1. Machine for unrolling, spreading and mechanically holding a cover on the ground, in field vegetable farming for example, a machine of the type principally comprising:
- a chassis (2) with, in particular, a bearing beam (3) of a length appropriate for the length of the reel to be received,
- at each end of the chassis, a basket (4) for an operator (5),
- a set of wheels provided for movement of the machine,
- driving means with, in particular, a hydraulic motor (6), means of receiving a reel and means of coupling the latter to the motor,
- on each side of the chassis (2), a parallelogram arm (7) carrying a burying system with a compressing wheel and disc tiller (9) and
- a set of means of hitching the machine to a tractor with appropriate hydraulic and electrical connections,
the same machine being suitable, on one hand when it is hitched to a tractor, to carry out the mechanical laying of a cover (13) on the ground and suitable, on the other hand when it is hitched to the said tractor (11), to carry out the mechanical recovery of the said cover and its automatic rolling up on a reel carried by the machine, **characterized in that** it comprises at least two configurations, i.e.:
- a laying configuration, in accordance with which it is arranged transversely to the tractor's direction of travel and moves on two wheels (12) and comprises two arms (7), each of the arms being placed in the laying position, that is to say opened out so as to apply to each edge of the cover on the ground by a compressing wheel (8), followed by a disc tiller (9) which throws soil back on to the edge of the said cover so as to hold it on the ground and
- a recovery configuration, in accordance with which it is arranged transversely to the direction of travel, moves on the wheels (12), the arms (17) [*sic*] being folded in and a pivoting lifting bow (10) being positioned for lifting the cover throughout recovery.

2. Machine according to claim 1, **characterized in that** the lifting bow (10) is formed from welded tubes, a lower horizontal tube (14) of which is substantially of the same width as the machine (1) with, at each end, a linking upright (15) suitable for being fitted so as to pivot at each end of the machine chassis, an upper tube (16) with a horizontal central part (16a) and two side parts (16b), curved or inclined and welded to the two ends of the lower tube, the spacing of the lower tube (14) and upper tube (16) being maintained by a set of vertical tubes (17).

3. Machine according to claim 1 or 2, **characterized in that** it also comprises a hydraulic distributor used for regulating the rolling up speed in the recovery configuration.

4. Machine according to one of claims 1 to 3, **characterized in that** it also comprises a road configuration, in accordance with which the arms (7) are folded, as in the recovery configuration, the lifting bow (10) is positioned and held at the back of the chassis, parallel with the beam (3) and in the vertical position, the beam being mounted on an axle (19) with two wheels for transport, the said axle being perpendicular to the beam, itself hitched to the rear of the tractor by one of its ends.

5. Machine according to one of claims 1 to 4, **characterized in that** it also comprises brake rollers provided on the reel driving means.

6. Machine according to one of claims 1 to 5, **characterized in that** means of adjusting the disc tiller penetration depth are provided.

7. Machine according to one of claims 1 to 6, **characterized in that** the bow is 6 to 8 m long.

8. Machine according to one of claims 1 to 6, **characterized in that** it is suitable for carrying reels up to 15 metres wide.

9. Machine according to one of claims 1 to 8, **characterized in that** it is suitable for being hitched to the rear of the tractor for the laying configuration and suitable for being hitched to the front of the said tractor for the recovery configuration.

## Patentansprüche

1. Maschine zum mechanischen Abwickeln, Ausbreiten und Halten von Tuchmaterial auf dem Boden, beispielsweise in Freiluftgemüsekulturen, wobei die Maschine hauptsächlich umfasst:
- ein Gestell (2) mit insbesondere einem Tragbalken (3) mit einer an die Länge der aufzunehmenden Spule angepassten Länge;
- an jedem Ende des Gestells eine Kabine (4) für einen Bediener (5),
- eine Einheit von Rädern, die zum Verschieben der Maschine vorgesehen sind,
- Antriebsmittel mit insbesondere einem Hydraulikmotor (6) und Mittel zur Aufnahme einer Spule und zur Kupplung derselben an den Motor,
- auf jeder Seite des Gestells (2) einen Parallelogrammarm (7), der ein Unterackerungssystem mit Pressrad und Öffnungsscheibe (9) trägt,
- eine Einheit von Anhängemitteln der Maschine an einen Traktor mit entsprechenden hydraulischen und elektrischen Anschlüssen,
wobei diese Maschine in der Lage ist, einerseits, wenn sie an einen Traktor angehängt ist, das mechanische Verlegen eines Tuchmaterials (13) auf dem Boden durchzuführen, und andererseits, wenn sie an den Traktor (11) angehängt ist, das mechanische Aufsammeln des Tuchmaterials und sein automatisches Wiederaufwickeln auf eine von der Maschine getragene Spule durchzuführen,
**dadurch gekennzeichnet, dass** sie mindestens zwei Ausführungen umfasst, nämlich:
- eine Verlegeausführung, nach der sie quer zur Bewegungsrichtung des Traktors angeordnet ist und auf zwei Rädern (12) fährt und zwei Arme (7) umfasst, wobei jeder der Arme in Verlegeposition angeordnet ist, d.h. nach außen hin abgestellt ist, um jeden Rand des Tuchmaterials durch ein Pressrad (8) auf den Boden zu drücken, gefolgt von einer Öffnungsscheibe (9), die Erde auf den Rand des Tuchmaterials aufwirft, um es am Boden zu halten,
- eine Aufsammelausführung, nach der sie quer zur Bewegungsrichtung angeordnet ist, auf den Rädern (12) fährt, wobei die Arme (7) eingezogen sind und ein schwenkbarer Hubbogen (10) angeordnet ist, um das Tuchmaterial während des Aufsammelns anzuheben.

2. Maschine nach Anspruch 1, **dadurch gekennzeichnet, dass** der Hubbogen (10) von verschweißten Rohren gebildet ist, unter anderem einem unteren horizontalen Rohr (14), von im Wesentlichen derselben Breite wie die Maschine (1) mit an jedem Ende einem Verbindungsständer (15), der schwenkbar an jedem Ende des Gestells der Maschine montiert werden kann, einem oberen Rohr (16) mit einem horizontalen zentralen Teil (16a) und zwei Seitenteilen (16b), die gekrümmt oder geneigt und an die beiden Enden des unteren Rohrs geschweißt sind, wobei der Abstand zwischen den unteren (14) und oberen Rohren (16) durch eine Reihe von vertikalen Rohren (17) gehalten wird.

3. Maschine nach einem der Ansprüche 1 bis 2, **dadurch gekennzeichnet, dass** sie ferner einen hydraulischen Verteiler umfasst, der dazu dient, die Aufwickelgeschwindigkeit in der Aufsammelausführung zu regeln.

4. Maschine nach einem der Ansprüche 1 bis 3, **dadurch gekennzeichnet, dass** sie ferner eine Straßenausführung umfasst, nach der die Arme (7) wie bei der Aufsammelausführung eingeklappt sind, der Hubbogen (10) hinten am Gestell parallel zum Tragbalken (3) und in vertikaler Position angeordnet und gehalten wird, wobei der Tragbalken auf einer Achse (19) mit zwei Transporträdern montiert ist, wobei die Achse senkrecht zum Tragbalken verläuft, der selbst hinten am Traktor mit einem seiner Enden angehängt ist.

5. Maschine nach einem der Ansprüche 1 bis 4, **dadurch gekennzeichnet, dass** sie ferner Bremswalzen umfasst, die auf den Antriebsmitteln der Spule vorgesehen sind.

6. Maschine nach einem der Ansprüche 1 bis 5, **dadurch gekennzeichnet, dass** ferner Mittel zur Einstellung der Eindringtiefe der Öffnungsscheiben vorgesehen sind.

7. Maschine nach einem der Ansprüche 1 bis 6, **dadurch gekennzeichnet, dass** der Bogen eine Länge von 6 bis 8 m hat.

8. Maschine nach einem der Ansprüche 1 bis 6, **dadurch gekennzeichnet, dass** sie geeignet ist, Spulen bis zu 15 Meter Breite zu tragen.

9. Maschine nach einem der Ansprüche 1 bis 8, **dadurch gekennzeichnet, dass** sie hinten am Traktor für die Verlegeausführung und vorne am Traktor für die Aufsammelausführung angehängt werden kann.
